# EUROPEAN PATENT APPLICATION

(11) **EP 0 726 211 A1**
(43) Date of publication of application: **14.08.1996**
(21) Application number: 96300751.3
(22) Date of filing: 02.02.1996
(51) Int. Cl.: B65D 75/36, B65D 59/04, B65D 77/20

(54) **Recyclable package and method of forming it**

(30) Priority: 08.02.1995 GB 9502431; 24.10.1995 GB 9521800
(71) Applicant: The Berkshire Printing Company Limited, Reading, Berkshire RG3 1JB (GB)
(72) Inventor: Mann, Peter, Bradford, West Yorkshire BD15 9JD (GB)
(74) Representative: Calderbank, Thomas Roger

(57) **Abstract**

The present invention provides a package, for example for foodstuffs, including a receptacle (11; 40; 70; 84; 94) for holding one or more items. Access to the cavity within the receptacle is via an aperture closed by a sheet (10; 41; 71; 72; 80). The receptacle and sheet are bonded by varnish or other heat activatable material. For ease of recycling, the receptacle and the sheet are each composed of card. The cavity may be cylindrical, with the sheet closing one open end of the cylinder while another open end of the cylinder is closed by a lid. Alternatively, two cylindrical receptacles (94, 96), each having an open end and an end closed by a sheet of card, may be telescoped.

## Description

The present invention relates to the forming of a package, and to a package thus formed.

It is very common to use the type of package known as a blister package to enclose one or more items, e.g. for sale. In a blister package, an open container of plastics material, which forms a receptacle for the item(s), is bonded to a sheet which covers the mouth of the container. To facilitate such bonding, the container has a flange extending around its mouth which then overlies the sheet, to permit bonding between the flange and the sheet. To bond the receptacle to the sheet, a heat-activatable material is used. Indeed, the heating may also affect the plastics material of the receptacle, to improve bonding strength. In such blister packages, the sheet is usually of card, but may sometimes be of plastics.

It is also known to provide a package for sealing a perishable, sterile, or partially prepared product, having an open container, with the mouth of that container then being covered by a plastics sheet, which is bonded to the mouth of the container. This is thus similar to a blister package, but is generally not referred to as such. Again, the sealing of the sheet to the mouth of the container may involve a heat activatable material, or may involve partial melting of the plastics material to achieve a suitable seal.

One disadvantage of such known types of packages is that they are not generally recyclable. Where the package is made of plastics materials, recycling is not readily possible, and even when the package is made partially of recyclable materials (for example, where the sheet of a blister package is of card), there is then the problem of separating the recyclable and non-recyclable components of the package, which is troublesome.

At its most general, therefore, the present invention proposes that both an open receptacle for containing one or more items and the sheet which closes the mouth of the receptacle be made of card. In this way, the whole of the package is recyclable. However, it is then necessary to provide satisfactory bonding of the receptacle and the sheet.

The receptacle may be a container similar in configuration to the containers discussed above. Alternatively, however the receptacle may define apertures other than the mouth of the receptacle which is closed by the sheet. For example, the receptacle may consist of a card tube open at both ends. One open end of the cylinder constitutes the mouth of the receptacle which is closed by the card sheet, while the other end may be closed either by a second sheet of card, or in some other manner, for example by a lid or a sheet of plastic film. The cylinder is not necessarily circular in cross-section but may be of any cross-sectional shape, for example square or even heart shaped.

In a first aspect of the present invention, it is proposed that a heat activatable material be provided on the surface of the sheet and/or one or more flanges around the mouth of the receptacle. Then, by placing the flanges on the sheet, and applying heat and pressure to the resulting assembly, for a suitable time, the heat-activatable material then bonds the receptacle to the sheet.

Preferably, the heat activatable material is a blister varnish, rather than a glue. Blister varnish, unlike glue, has the advantage of being printable onto card, and therefore the varnish can be applied to the sheet and to the flanges using normal printing techniques. Indeed, the application of the varnish may be part of the process of printing other material on to the card. Moreover, where the package is intended as a replacement for a blister package, it is desirable for the sheet to have a surface or surfaces coated with varnish, in order to protect the card material. Indeed, the use of varnish to adhere a card sheet to a card receptacle, is not, in itself, known and thus this forms a second, independent, aspect of the present invention.

Another significant difference between blister varnish and most glues is that blister varnish can be reactivated even after it has set. Hence, it is possible to apply the blister varnish to e.g. the sheet, and allow the varnish to set, before the flanges of the receptacle are placed thereon. This permits production of the sheet, and e.g. printing thereon, to be entirely separate from the attaching of the receptacle thereto. The fact that the blister varnish has set when the flanges of the receptacle are placed on the sheet does not affect the bonding of the flanges of the receptacle to the sheet, since the varnish will reactivate under heat and pressure applied for a suitable time.

Furthermore, many blister varnishes differ chemically from glues in that they are spirit based, while other blister varnishes can be dried by heat or U.V. or even spray powder as inks are. The resultant fast curing properties from liquid form allow application by printing techniques during the same production cycle as application of printing inks with no detraction to qualities of adherence when reactivated at a later stage by application of heat and pressure for a suitable time. Glues in liquid form cannot be cured sufficiently quickly to allow concurrent application during the printing process and those glues which can be activated by heat are in solid form before activation, i.e. not suited to application by printing.

If the card receptacle used in the present invention has a shape similar to the plastics receptacle of a blister package, then it is possible to form a package according to the present invention using standard blister-packaging manufacturing apparatus. Such apparatus has means for applying heat and pressure to an assembly of a plastics receptacle and sheet of e.g. card, and thus can apply heat and pressure to the assembly of a card receptacle and a card sheet. Where the heat-activatable material is blister varnish, the same levels of heat can be used as in the formation of a blister package. Thus, it is possible to manufacture a package according to the present invention using standard apparatus, rather than having to provide special apparatus for its manufacture.

One advantage of the use of a card receptacle, rather than a plastics one, is that it is then readily possible to print on the receptacle, it is already known to print on the surface of a card sheet used in a blister package, and the same techniques can then be applied to the card receptacle, particularly if that has a planar base. Moreover, other techniques known in card packaging may be used. For example, the receptacle and/or the sheet may have one or more tear-off strips therein, formed by suitable perforation of the card material, enabling easy access to items sealed within the package.

Many different receptacle/sheet configurations may be used within the present invention. Where the package of the present invention is to be used as a replacement for a blister package, it may be of a shape and size substantially the same as known blister packages. However, the present invention may also be applied to other types of packages.

For example, a suitable treatment of the card material, a package according to the present invention may be usable to replace the known sealed packages for perishable, sterilised or partially prepared products. In this case, the sheet will cover the mouth of the receptacle, but need not extend beyond the flange or flanges of the receptacle. In a replacement for a blister package, the sheet will normally extend beyond those flanges, at least on one direction. When a package for a perishable, sterile or partially prepared product is formed in accordance with the present invention, access to the product is preferably through the sheet, and again standard techniques may be used known in cardboard packaging to permit all or part of the sheet to be removable to permit access to the package.

Preferably the flanges extend outwardly from the periphery of the mouth, as in a conventional blister pack, but an alternative is for the flanges to extend inwardly to overlie the sheet. It is also possible to have a combination of inwardly and outwardly extending flanges.

It is not necessary for the flanges to extend from around the entire periphery of the mouth of the package. Instead, the flanges may extend only from selected portions of the periphery of the mouth.

A further alternative, by providing a sheet which is approximately double the area defined by the flanges on the mouth of the package, is for the sheet to form a greetings card, with the receptacle extending from the back thereof. The receptacle may then contain a gift for the person who is to receive the greetings card.

It is even possible to form a package according to the invention by providing two-ended tubes of substantially the same cross-sectional shape, but slightly different diameters, closing a respective end of each tube with a respective sheet of card as described above, and inserting the open end of the narrower tube into the open end of the other tube, so as to telescope the tubes. Thus, a closed volume for storing goods is provided within the tube of smaller cross-sectional area.

Embodiments of the present invention will now be described in detail, by way of example, with reference to the accompanying drawings, in which:
Fig. 1 shows a package being a first embodiment of the present invention;
Fig. 2 illustrates the manufacture of the package shown in Fig. 1;
Fig. 3 illustrates a second embodiment of the present invention, being a variation of the embodiment of Fig. 1;
Fig. 4 shows a third embodiment of the present invention;
Fig. 5 illustrates a modification of the embodiment of Fig. 4;
Fig. 6 illustrates a fourth embodiment of the present invention;
Fig. 7 illustrates a fifth embodiment of the present invention; and
Fig. 8 illustrates a sixth embodiment of the present invention.

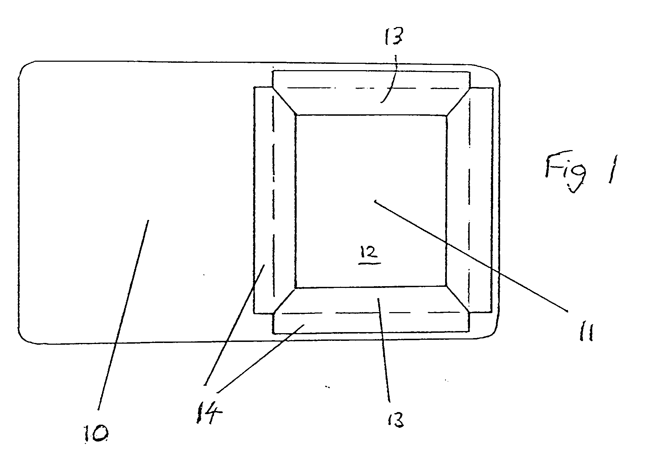

Fig. 1 illustrates a first embodiment of the present invention, being a package intended as a replacement for a blister package. As illustrated in Fig. 1, the package has a sheet 10 on which is mounted a receptacle 11. The receptacle 11 has a flat base 12 and sloping side walls 13, so that the base 12 is held clear of the sheet 10 and thus the base 12, the walls 13 and the sheet 10 define an enclosure for receiving an object. The walls 13 terminate in flanges 14, which overlie the sheet 10. Blister varnish is applied to the surface of the sheet 10, and also possibly surfaces of the flanges 14, and the application of heat and pressure to the assembly shown in Fig. 1 for a suitable time will re-activate that varnish. After cooling, the flanges 14, and hence the receptacle 11 will be bonded to the sheet 10. Thus, a package is formed which is similar in shape to a blister package, but, since the sheet 10 and the receptacle 11 are of card material, is made wholly of recyclable material.

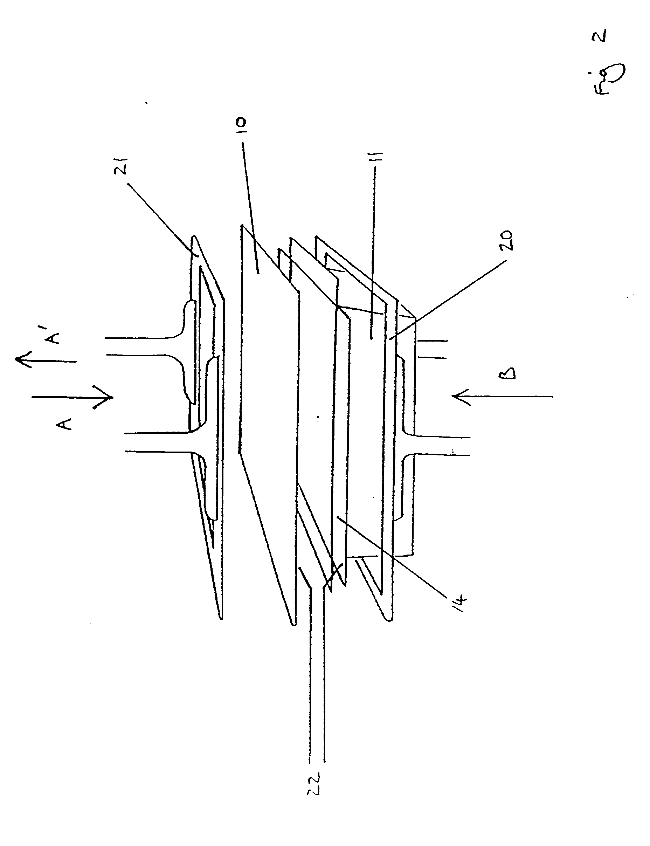

Fig. 2 illustrates in more detail the formation of the package shown in Fig. 1. The sheet 10 and the receptacle 11 are pre-formed, using standard card packaging processing techniques, and then the receptacle 11 is mounted on a suitable receiving frame 20 with the open mouth of the receptacle 11 uppermost. For example, the receiving frame 20 may be raised in the direction of arrow B until it contacts the flange 14 of the receptacle 11. The sheet 10 is then placed over the open mouth of the receptacle 11, and a heating frame 21 lowered in the direction of arrow A onto the back of the sheet 10. At some time prior to this, blister varnish is applied to the opposing surfaces 22 of the flanges 14 and of the sheet 10, so that the varnished surfaces 22 are brought into contact when the sheet 10 is placed over the mouth of the receptacle 11. Such blister varnish may be applied by known printing techniques. The receptacle 11 will also contain the item to be packaged, which may be placed in the receptacle 11 after it has been mounted in the frame so that it is easy to place the item into the open mouth of the receptacle 11.

Heat and pressure are then applied to the assembly, using the heating frame 21, which is brought into contact with the sheet 10, for example by moving it in the direction of the arrow A. The heating re-activates the blister varnish on opposed surfaces 22, so that the varnish on those surfaces mixes. The application of pressure helps to form a bond. The heating frame 21 is then removed, by raising it in the direction of the arrow A'. The varnish then cools, and as it does so, bonds together the varnished surfaces 22 thereby bonding the receptacle 11 to the sheet 10, and so enclosing the item to be packaged there between. The completed package may then be removed from the support frame 20.

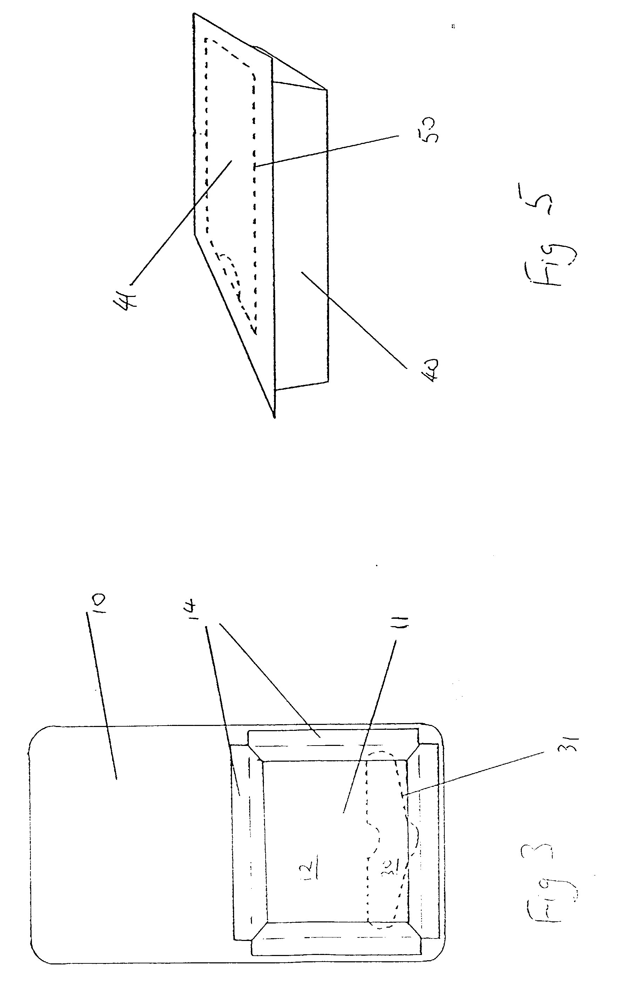

Fig. 3 illustrates a second embodiment of the present invention, which is similar to the embodiment of Fig. 1 and the same reference numerals are used to indicate corresponding parts. However, in the embodiment of Fig. 3, the receptacle 11 has a part 30 of its surface bounded by a perforation 31. Hence, the part 30 of the receptacle 11 is removable from the rest of the receptacle 11, by tearing along the perforation 31, thereby giving access to the interior of the receptacle 11, and hence permitting any item therein to be removed.

Of course, the particular configuration of the tear-off part 30 of the receptacle 11 is not limited to that shown in Fig. 3, and many other configurations may be used. Such tear-off parts are well known, in themselves, in cardboard packaging and thus similar techniques may be applied in the present invention to those already known *per se*.

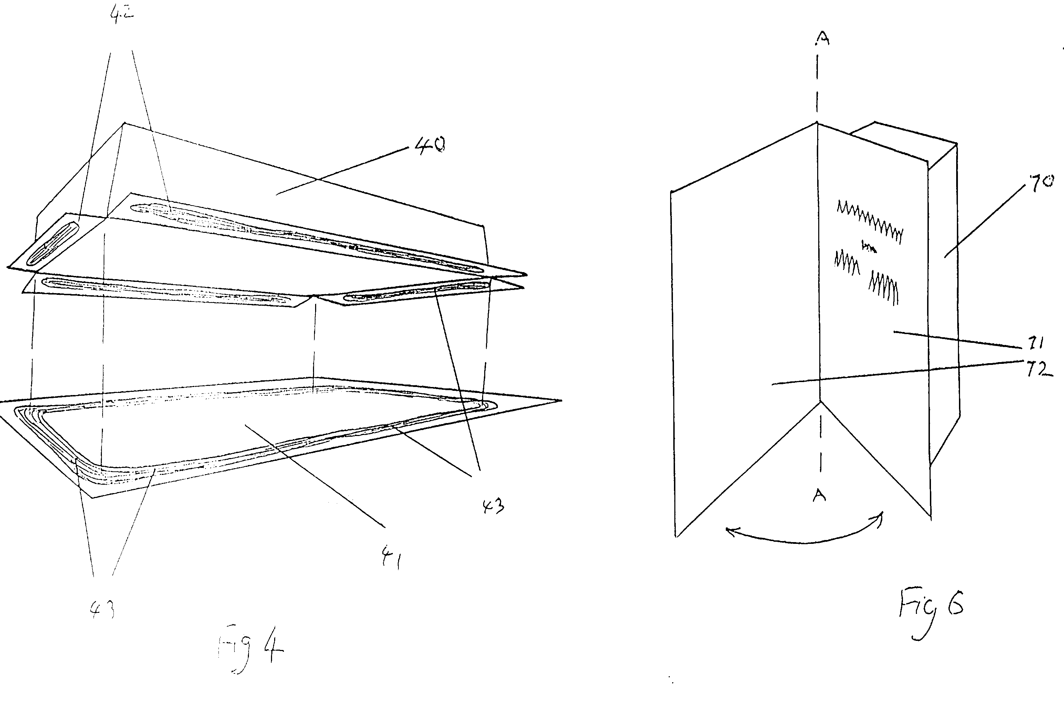

Fig. 4 illustrates a third embodiment of the present invention. In this embodiment, a receptacle 40 has its open mouth closed by a sheet 41, but in this embodiment the area of the sheet is substantially the same as the area defined by flanges 42 around the mouth of the receptacle 40. Then, heat-activatable material 43, such as blister varnish, is applied to the flanges 42 and the sheet 41, and a suitable product placed within the receptacle 40 prior to the bonding of the sheet 41 and the receptacle 40. Such an arrangement may be used, for example, to contain a food product. Indeed, where that food product is to be heated for consumption, heating may be carried out whilst the food product is within the package, e.g. by microwave heating, and that heating may also weaken the bonding of the sheet 41 to the flanges 42, (since the blister varnish will again reactivate under heat) permitting the sheet 41 to be removed easily when the product is heated sufficiently for consumption.

A variation on this is illustrated in Fig. 5, in which the sheet 41 has a perforation 50 therein, which enables the part of the sheet corresponding to the open mouth of the receptacle 40, to be removed to give access to the product therein. Again, known techniques for perforating card may be used.

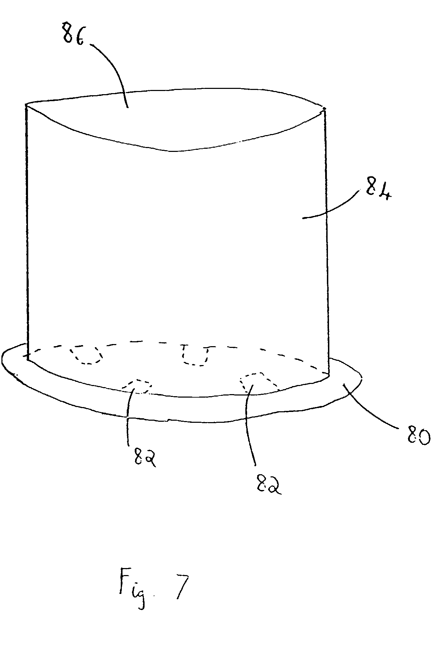

Fig. 6 illustrates another embodiment of the present invention, in which the package also serves as a greetings card. In this embodiment, the receptacle 70 is covered by a sheet which has a first part 71 which covers the mouth of the receptacle in a similar way to the sheet 41 in the embodiment of Fig. 4, but has a second part 72 of approximately equal area joined along one edge thereof. By folding the second part 72 so that it covers the first part 71 (folding along the line A-A in Fig. 6), the parts 71 and 72 are equivalent to a greetings card, and may contain a message or other suitable material thereon. The receptacle 70 may then contain a gift item, which is accessible either through the base of the receptacle 70, using a perforated area similar to that shown in Fig. 3, or possibly accessible through the part 71 of the sheet, using a perforation similar to that shown in Fig. 5. Apart from this, the embodiment of Fig. 6 may be similar to the other embodiments, with the receptacle 70 being bonded to the sheet by the reactivation of blister varnish between the sheet and flanges at the mouth of the receptacle 70.

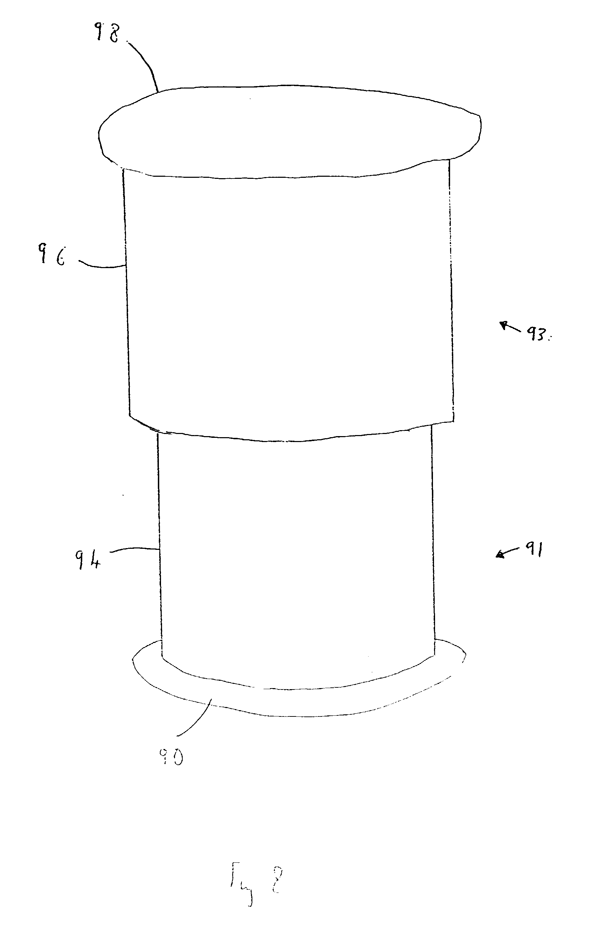

Figure 7 illustrates a fifth embodiment of the invention, in which the receptacle is defined by an open ended card tube 84. In this embodiment, the tube has a circular cross-section, although other cross-sections, for example square cross-sections, are also possible.

A number of flanges 82 extend inwardly from one end edge of the tube. These flanges 82 are attached, by the methods described above, to a circular sheet of card 80, which thereby closes that end of the cylinder. The other end 86 of the cylinder may be closed by plastic film, for example, or a tight fitting lid.

Figure 8 illustrates a sixth embodiment of the invention composed of two bodies 91, 93 constructed in the method described above with reference to Fig. 7. That is, each body 91, 93, consists of an open-ended card tube 94, 96 closed at one end by a circular card sheet 90, 98. One tube 94, is of smaller diameter than the other tube 96, so that goods may be inserted into the first tube 94, and the package closed by telescoping the second tube 96 around the first tube 94.

Although the embodiment of Figures 7 and 8 are shown with a circular cross-section, the tubes may be of any cross-sectional shape, for example heart shaped.

## Claims

1. A package comprising:
a receptacle (11, 40, 70, 84, 90) for containing one or more items and defining an aperture, the receptacle (11, 40, 70, 84, 90) including one or more flanges (14, 42) extending from the edge of the aperture; and
a closure element (10, 41, 71, 72, 80) including a laminar portion which is adhered to the one or more flanges (14, 42) and closes the aperture;
characterised in that:
if the receptacle (11, 40, 70, 84, 94) and the closure element (10, 41, 71, 72, 80) are each of card and are adhered together by a heat-activatable material.

2. A package according to claim 1, wherein the receptacle (11, 40, 70, 84, 94) and closure element (10,41, 71, 72, 80) are not part of same card web.

3. A package comprising:
a receptacle for containing one or more items and defining an aperture, the receptacle including one or more flanges extending from the edge of the aperture; and
a closure element including a laminar portion which is adhered to the one or more flanges and closes the aperture;
characterised in that;
the receptacle and the closure element are each of card and are not part of the same card web.

4. A package according to any one of the preceding claims, wherein the laminar portion of the closure element extends outwardly of the aperture.

5. A package comprising:
a receptacle (11, 40, 70, 84, 94) for containing one or more items and defining an aperture, the receptacle (11, 40, 70, 84, 94) including one or more flanges (14, 42) extending from the edge of the aperture; and
a closure element (10, 41, 71, 72, 80) including a laminar portion which is adhered to the one or more flanges (14, 42) and closes the aperture characterised in that:
if the receptacle (11, 40, 70, 84, 94) and the closure element (10, 41, 71, 72, 80) are each of card and the laminar portion of the closure element extends outwardly of the aperture.

6. A package according to any one of the preceding claims, in which at least a portion of the receptacle (84, 94) is cylindrical, and the aperture is an open end of the cylindrical portion.

7. A package according to claim 6 in which the opposite end of said cylindrical portion of the receptacle (84, 94) defines a further aperture.

8. A package according to claim 7 further comprising a further closure element (96) closing said further aperture.

9. A package according to claim 7 in which said further closure element (96) defines a cylindrical cavity with a closed end, the cylindrical portion of the receptacle (84, 94) being telescoped within said cavity with said aperture facing said closed end.

10. A package according to any one of the preceding claims, in which the closure element (71, 72) includes a second portion (72) divided from said laminar portion by a line of weakness, whereby the second portion (72) can be folded to overlie the laminar portion.

11. A package according to any one of the preceding claims, in which the receptacle and/or the closure element includes one or more tear-off strips to enable access to the contents of the receptacle.

12. A package comprising:
a receptacle (11, 40, 70, 84, 94) for containing one or more items and defining an aperture; and
a closure element (10, 41, 71, 72, 80) including a laminar portion which is adhered to the receptacle (11, 40, 70, 84, 94) and closes the aperture:
characterised in that;
the receptacle (11, 40, 70, 84, 94) and the closure element (11, 40, 70, 84, 94) are both of card, and are adhered together by a heat activatable varnish.

13. A method of forming a package comprising:
forming a layer of heat activatable material on a surface (22) of one or both of a receptacle (11, 40, 70, 84, 94) and a laminar portion of a closure element (10, 41, 71, 72, 80), the receptacle being for containing items and defining an aperture, each of said receptacle and card being made of card;
arranging said receptacle and closure element with said surface or surface thereof contacting the other of said receptacle and closure element and the laminar portion of the closure element closing said aperture; and
applying pressure and heat to the junction of said receptacle and closure element to bond the receptacle to the closure element.

14. A method according to claim 13 in which the heat activatable material is varnish.

15. A method according to claim 14 or claim 10 in which the or each layer of heat activatable material is formed by printing.
